# EUROPEAN PATENT APPLICATION

(11) **EP 3 264 803 A1**
(43) Date of publication of application: **03.01.2018**
(21) Application number: 15883708.8
(22) Date of filing: 04.03.2015
(51) Int. Cl.: H04W 4/00, H04W 88/02, H04W 88/08

(54) **METHOD AND APPARATUS FOR SETTING COVERAGE LEVEL OF UE**

(71) Applicant: Huawei Technologies Co., Ltd., Longgang District Shenzhen, Guangdong 518129 (CN)
(72) Inventor: YANG, Yi, Shenzhen Guangdong 518129 (CN); TIE, Xiaolei, Shenzhen Guangdong 518129 (CN); HUA, Meng, Shenzhen Guangdong 518129 (CN)
(74) Representative: Thun, Clemens
(86) International application number: PCT/CN2015/073662
(87) International publication number: WO 2016/138651

(57) **Abstract**

Embodiments of the present invention provide a method for setting a coverage level of a user terminal UE. The method includes: receiving corresponding information from a communications device, where the corresponding information indicates a correspondence between at least one sending resource and at least one coverage level; receiving, from the communications device, at least one segment of control information sent by using the at least one sending resource, where each segment of control information in the at least one segment of control information is sent by using one sending resource in the at least one sending resource; parsing the at least one segment of control information to obtain content included in the at least one segment of control information; and setting, according to the corresponding information if content included in one segment of control information in the at least one segment of control information includes information indicating an identity of the UE, a coverage level of the UE to a first coverage level that is in the at least one coverage level and that is corresponding to a sending resource by using which the one segment of control information is sent.

## Description

### TECHNICAL FIELD

The present invention relates to the user terminal field, and in particular, to a method and an apparatus for setting a coverage level of a user terminal, and a system.

### BACKGROUND

Machine type communication can be widely applied to fields, such as smart metering, medical tests, logistics detection, and fire monitoring. In machine type communication, a terminal user end (UE) estimates a coverage level of the UE, and uploads an estimated result to a communications device (for example, a base station). Then, the base station sends a signal to the UE according to a sending policy for the coverage level, so that quality of communication between the base station and the UE can meet a requirement. However, estimation by the UE usually has a deviation, and the signal sent by the communications device according to the estimated result of the UE usually cannot meet an actual communication requirement.

### SUMMARY

Embodiments of the present invention provide a method and an apparatus for setting a coverage level of UE, so as to more accurately set the coverage level of the UE in a communication environment, and better meet an actual communication requirement.

According to a first aspect, an embodiment of the present invention provides a method for setting a coverage level of a user terminal UE, including: receiving corresponding information from a communications device, where the corresponding information indicates a correspondence between at least one sending resource and at least one coverage level; receiving, from the communications device, at least one segment of control information sent by using the at least one sending resource, where each segment of control information in the at least one segment of control information is sent by using one sending resource in the at least one sending resource; parsing the at least one segment of control information to obtain content included in the at least one segment of control information; and setting, according to the corresponding information if content included in one segment of control information in the at least one segment of control information includes information indicating an identity of the UE, a coverage level of the UE to a first coverage level that is in the at least one coverage level and that is corresponding to a sending resource by using which the one segment of control information is sent.

In a first possible implementation manner of the first aspect, the setting, according to the corresponding information if content included in one segment of control information in the at least one segment of control information includes information indicating an identity of the UE, a coverage level of the UE to a first coverage level that is in the at least one coverage level and that is corresponding to a sending resource by using which the one segment of control information is sent includes: setting the coverage level of the UE to the first coverage level according to the corresponding information if the content included in the one segment of control information in the at least one segment of control information includes the information indicating the identity of the UE and at least one of the following information: uplink/downlink scheduling information, a request for aperiodic channel quality indicator reporting, a change indication and an uplink power control command of a multicast control channel, or an acknowledgment/negative acknowledgment ACK/NACK feedback on random access channel RACH resource allocation and uplink data.

With reference to the first aspect, or the first possible implementation manner of the first aspect, in a second possible implementation manner, the at least one segment of control information includes several segments of control information; and the receiving at least one segment of control information sent by using the at least one sending resource includes: periodically receiving the several segments of control information; and the parsing the at least one segment of control information to obtain content included in the at least one segment of control information includes: periodically parsing the several segments of control information to obtain content included in the several segments of control information.

With reference to any one of the first aspect, or the first and the second possible implementation manners of the first aspect, in a third possible implementation manner, the method further includes: before the receiving, from the communications device, at least one segment of control information sent by using the at least one sending resource, setting the coverage level of the UE to a second coverage level in the at least one coverage level.

With reference to the third possible implementation manner of the first aspect, in a fourth possible implementation manner, the first coverage level is different from the second coverage level.

With reference to the fourth possible implementation manner of the first aspect, in a fifth possible implementation manner, the first coverage level is one level higher than the second coverage level.

With reference to any one of the first aspect, or the first to the fifth possible implementation manners of the first aspect, in a sixth possible implementation manner, the receiving, from the communications device, at least one segment of control information sent by using the at least one sending resource includes: detecting quality of data transmission between the communications device and the UE; and if the quality is lower than a quality threshold, receiving, from the communications device, the at least one segment of control information sent by using the at least one sending resource.

With reference to any one of the first aspect, or the first to the sixth possible implementation manners of the first aspect, in a seventh possible implementation manner, the information indicating the identity of the UE includes a UE identity existing in cyclic redundancy check code in a form of implicit code.

According to a second aspect, an embodiment of the present invention provides a method for indicating a coverage level for a user terminal UE, including: sending corresponding information to the UE, where the corresponding information indicates a correspondence between at least one sending resource and at least one coverage level; determining a coverage level of the UE as a first coverage level in the at least one coverage level; and sending control information to the UE by using a sending resource corresponding to the first coverage level, so as to instruct the UE to set the coverage level of the UE to the first coverage level according to the corresponding information, where content included in the control information includes information indicating an identity of the UE.

In a first possible implementation manner of the second aspect, the sending control information to the UE by using a sending resource corresponding to the first coverage level includes: periodically sending the control information to the UE by using the sending resource corresponding to the first coverage level.

With reference to the second aspect, or the first possible implementation manner of the second aspect, in a second possible implementation manner, the determining a coverage level of the UE as a first coverage level includes: detecting quality of data transmission between a communications device and the UE; and determining the coverage level of the UE as the first coverage level according to the quality.

According to a third aspect, an embodiment of the present invention provides a method for setting a coverage level of UE, including: receiving control information from a communications device; parsing the control information to obtain content included in the control information; and setting, if the content includes information for instructing to set a coverage level of the UE to a first coverage level in at least one coverage level, the coverage level of the UE to the first coverage level.

In a first possible implementation manner of the third aspect, the receiving control information from a communications device includes: receiving, from the communications device, the control information sent by using a dedicated sending resource, where the dedicated sending resource is only used to send information to the UE.

In a second possible implementation manner of the third aspect, the receiving control information from a communications device includes: receiving, from the communications device, the control information sent by using a designated sending resource, where the designated sending resource is corresponding to one coverage level in the at least one coverage level; and the setting, if the content includes information for instructing to set a coverage level of the UE to a first coverage level in at least one coverage level, the coverage level of the UE to the first coverage level includes: setting the coverage level of the UE to the first coverage level if the content includes information indicating an identity of the UE and the information for instructing to set the coverage level of the UE to the first coverage level in the at least one coverage level.

In a third possible implementation manner of the third aspect, the designated sending resource is corresponding to a highest coverage level in the at least one coverage level.

In a fourth possible implementation manner of the third aspect, the receiving control information from a communications device includes: receiving, from the communications device, the control information sent by using a common sending resource, where the common sending resource is corresponding to several coverage levels in the at least one coverage level.

With reference to any one of the third aspect, or the first to the fourth possible implementation manners of the third aspect, in a fifth possible implementation manner, the method further includes: before the receiving control information, setting the coverage level of the UE to a second coverage level in the at least one coverage level, where the first coverage level is higher than the second coverage level.

With reference to any one of the third aspect, or the first to the fifth possible implementation manners of the third aspect, in a sixth possible implementation manner, the receiving control information includes: detecting quality of data transmission between the communications device and the UE; and if the quality is lower than a quality threshold, receiving the control information.

According to a fourth aspect, an embodiment of the present invention provides a method for indicating a coverage level for a user terminal UE, including: determining a coverage level of the UE as a first coverage level in at least one coverage level; and sending control information to the UE, so as to instruct the UE to set the coverage level of the UE to the first coverage level, where the control information includes information for setting the first coverage level.

In a first possible implementation manner of the fourth aspect, the sending control information to the UE includes: sending the control information to the UE by using a dedicated sending resource, where the dedicated sending resource is only used to send information to the UE.

In a second possible implementation manner of the fourth aspect, the method further includes: receiving an instruction indicating a designated coverage level, and determining, according to the instruction and a correspondence between the at least one coverage level and at least one sending resource, a sending resource that is corresponding to the designated coverage level and that is in the at least one sending resource; and the sending control information to the UE includes: sending the control information to the UE by using the sending resource corresponding to the designated coverage level, where the control information further includes information indicating an identity of the UE.

With reference to the second possible implementation manner of the fourth aspect, in a third possible implementation manner, the designated coverage level is a highest coverage level in the at least one coverage level.

In a fourth possible implementation manner of the fourth aspect, the sending control information to the UE includes: sending the control information to the UE by using a common sending resource, where the common sending resource is corresponding to several coverage levels in the at least one coverage level, and the control information further includes information indicating an identity of the UE.

With reference to any one of the fourth aspect, or the first to the fourth possible implementation manners of the fourth aspect, in a fifth possible implementation manner, the determining a coverage level of the UE as a first coverage level in at least one coverage level includes: detecting quality of data transmission between a communications device and the UE; and determining the coverage level of the UE as the first coverage level according to the quality.

In a sixth possible implementation manner of the fourth aspect, the control information includes downlink control information DCI, and the downlink control information DCI includes information indicating an identity of the UE and the information for setting the first coverage level.

In a seventh possible implementation manner of the fourth aspect, the sending control information to the UE includes: sending the control information to the UE by using a Media Access Control MAC control element, where the control information further includes information indicating an identity of the UE.

In an eighth possible implementation manner of the fourth aspect, the sending control information to the UE includes: sending the control information to the UE by using an enhanced dedicated channel-absolute grant channel E-AGCH.

In a ninth possible implementation manner of the fourth aspect, the sending control information to the UE includes: sending the control information to the UE by using a data code channel, where the control information exists in a form of data, the data code channel is used to send data, and the control information further includes information indicating an identity of the UE.

According to a fifth aspect, an embodiment of the present invention provides a method for indicating a coverage level for a user terminal UE, including: determining a coverage level of the UE as a first coverage level in at least one coverage level; determining a time interval according to the first coverage level; receiving, at a first moment, first information sent from the UE; determining a second moment according to the first moment and the time interval; and sending information to the UE at the second moment, so as to instruct the UE to set the coverage level of the UE to the first coverage level, where the time interval between the second moment and the first moment is used to indicate the first coverage level.

In a first possible implementation manner of the fifth aspect, the time interval is T+N or T-N, where T is a preset delay, and N is an integer multiple of 5120 or 4096 chips.

With reference to the fifth aspect, or the first possible implementation manner of the fifth aspect, in a second possible implementation manner, the first information includes a preamble sequence, and the second information includes an acquisition indicator channel for a preamble sequence signature.

According to a sixth aspect, an embodiment of the present invention provides a user terminal UE, including: a corresponding information receiving module, configured to receive corresponding information from a communications device, where the corresponding information indicates a correspondence between at least one sending resource and at least one coverage level; a control information receiving module, configured to receive, from the communications device, at least one segment of control information sent by using the at least one sending resource, where each segment of control information in the at least one segment of control information is sent by using one sending resource in the at least one sending resource; a parsing module, configured to parse the at least one segment of control information to obtain content included in the at least one segment of control information; and a setting module, configured to: if content included in one segment of control information in the at least one segment of control information includes information indicating an identity of the UE, set, according to the corresponding information, a coverage level of the UE to a first coverage level corresponding to a sending resource by using which the one segment of control information is sent.

In a first possible implementation manner of the sixth aspect, the setting module is specifically configured to set the coverage level of the UE to the first coverage level according to the corresponding information if the content included in the one segment of control information in the at least one segment of control information includes the information indicating the identity of the UE and at least one of the following information: uplink/downlink scheduling information, a request for aperiodic channel quality indicator reporting, a change indication and an uplink power control command of a multicast control channel, or an acknowledgment/negative acknowledgment ACK/NACK feedback on random access channel RACH resource allocation and uplink data.

With reference to the sixth aspect, or the first possible implementation manner of the sixth aspect, in a second possible implementation manner, the at least one segment of control information includes several segments of control information, the control information receiving module is specifically configured to periodically receive the several segments of control information, and the parsing module is specifically configured to periodically parse the several segments of control information to obtain content included in the several segments of control information.

With reference to any one of the sixth aspect, or the first and the second possible implementation manners of the sixth aspect, in a third possible implementation manner, the setting module is further configured to: before the receiving at least one segment of control information sent by using the at least one sending resource, set the coverage level of the UE to a second coverage level in the at least one coverage level.

With reference to the third possible implementation manner of the sixth aspect, in a fourth possible implementation manner, the first coverage level is different from the second coverage level.

With reference to the fourth possible implementation manner of the sixth aspect, in a fifth possible implementation manner, the first coverage level is one level higher than the second coverage level.

With reference to any one of the sixth aspect, or the first to the fifth possible implementation manners of the sixth aspect, in a sixth possible implementation manner, the control information receiving module includes: a quality detection module, configured to detect quality of data transmission between the communications device and the UE; and an information receiving module, configured to: if the quality is lower than a quality threshold, receive, from the communications device, the at least one segment of control information sent by using the at least one sending resource.

With reference to any one of the sixth aspect, or the first to the sixth possible implementation manners of the sixth aspect, in a seventh possible implementation manner, the information indicating the identity of the UE includes a UE identity existing in cyclic redundancy check code in a form of implicit code.

According to a seventh aspect, an embodiment of the present invention provides a communications device, including: a corresponding information sending module, configured to send corresponding information to UE, where the corresponding information indicates a correspondence between at least one sending resource and at least one coverage level; a level determining module, configured to determine a coverage level of the UE as a first coverage level in the at least one coverage level; and a setting information sending module, configured to send control information to the UE by using a sending resource corresponding to the first coverage level, so as to instruct the UE to set the coverage level of the UE to the first coverage level according to the corresponding information, where content included in the control information includes information indicating an identity of the UE.

In a first possible implementation manner of the seventh aspect, the corresponding information sending module is specifically configured to periodically send the control information to the UE by using the sending resource corresponding to the first coverage level.

With reference to the seventh aspect, or the first possible implementation manner of the seventh aspect, in a second possible implementation manner, the level determining module includes: a quality detection module, configured to detect quality of data transmission between the communications device and the UE; and a level determining module, configured to determine the coverage level of the UE as the first coverage level according to the quality.

According to an eighth aspect, an embodiment of the present invention provides a user terminal UE, including: a control information receiving module, configured to receive control information from a communications device; a parsing module, configured to parse the control information to obtain content included in the control information; and a setting module, configured to: if the content includes information for instructing to set a coverage level of the UE to a first coverage level, set the coverage level of the UE to the first coverage level.

In a first possible implementation manner of the eighth aspect, the control information receiving module is specifically configured to receive the control information sent by using a dedicated sending resource, where the dedicated sending resource is only used to send information to the UE.

In a second possible implementation manner of the eighth aspect, the control information receiving module is specifically configured to receive, from the communications device, the control information sent by using a designated sending resource, where the designated sending resource is corresponding to one coverage level in the at least one coverage level, and the setting module is specifically configured to: if the content includes information indicating an identity of the UE and the information for instructing to set the coverage level of the UE to the first coverage level, set the coverage level of the UE to the first coverage level.

In a third possible implementation manner of the eighth aspect, the control information receiving module is specifically configured to receive, from the communications device, the control information sent by using a common sending resource, where the common sending resource may be corresponding to several coverage levels in at least one coverage level.

With reference to any one of the eighth aspect, or the first to the third possible implementation manners of the eighth aspect, in a fourth possible implementation manner, the setting module is further specifically configured to: before the receiving control information, set the coverage level of the UE to a second coverage level in the at least one coverage level, where the first coverage level is higher than the second coverage level.

With reference to any one of the eighth aspect, or the first to the fourth possible implementation manners of the eighth aspect, in a fifth possible implementation manner, the control information receiving module includes: a quality detection module, configured to detect quality of data transmission between the communications device and the UE; and an information receiving module, configured to: if the quality is lower than a quality threshold, receive the control information.

According to a ninth aspect, an embodiment of the present invention provides a communications device, including: a level determining module, configured to determine a coverage level of UE as a first coverage level in at least one coverage level; and a setting information sending module, configured to send control information to the UE, so as to instruct the UE to set the coverage level of the UE to the first coverage level, where the control information includes information for setting the first coverage level.

In a first possible implementation manner of the ninth aspect, the setting information sending module is specifically configured to send the control information to the UE by using a dedicated sending resource, where the dedicated sending resource is only used to send information to the UE.

In a second possible implementation manner of the ninth aspect, the communications device further includes: an instruction receiving module, configured to receive an instruction indicating a designated coverage level; and a correspondence module, configured to determine, according to the instruction and a correspondence between the at least one coverage level and at least one sending resource, a sending resource that is corresponding to the designated coverage level and that is in the at least one sending resource; and the setting information sending module is specifically configured to send the control information to the UE by using the sending resource corresponding to the designated coverage level, where the control information further includes information indicating an identity of the UE.

With reference to the second possible implementation manner of the ninth aspect, in a third possible implementation manner, the designated coverage level is a highest coverage level in the at least one coverage level.

With reference to the third possible implementation manner of the ninth aspect, in a fourth possible implementation manner, the setting information sending module is specifically configured to send the control information to the UE by using a common sending resource, where the common sending resource is corresponding to several coverage levels in the at least one coverage level, and the control information further includes information indicating an identity of the UE.

With reference to any one of the ninth aspect, or the first to the fourth possible implementation manners of the ninth aspect, in a fifth possible implementation manner, the level determining module includes: a quality detection module, configured to detect quality of data transmission between the communications device and the UE; and a level determining module, configured to determine the coverage level of the UE as the first coverage level according to the quality.

In a sixth possible implementation manner of the ninth aspect, the control information includes downlink control information DCI, and the downlink control information DCI includes information indicating an identity of the UE and the information for setting the first coverage level.

In a seventh possible implementation manner of the ninth aspect, the setting information sending module is specifically configured to send the control information to the UE by using a Media Access Control MAC control element, where the control information further includes information indicating an identity of the UE.

In an eighth possible implementation manner of the ninth aspect, the setting information sending module is specifically configured to send the control information to the UE by using an enhanced dedicated channel-absolute grant channel E-AGCH.

In a ninth possible implementation manner of the ninth aspect, the setting information sending module is specifically configured to send the control information to the UE by using a data code channel, where the control information exists in a form of data, the data code channel is used to send data, and the control information further includes information indicating an identity of the UE.

According to a tenth aspect, an embodiment of the present invention provides a communications device, including a level determining module, configured to determine a coverage level of UE as a first coverage level in at least one coverage level; an interval determining module, configured to determine a time interval according to the first coverage level; an information receiving module, configured to receive, at a first moment, first information sent from the UE; a moment determining module, configured to determine a second moment according to the first moment and the time interval; and a setting module, configured to send second information to the UE at the second moment, so as to instruct the UE to set the coverage level of the UE to the first coverage level, where the time interval between the second moment and the first moment is used to indicate the first coverage level.

In a first possible implementation manner of the tenth aspect, the time interval is T+N or T-N, where T is a preset delay, and N is an integer multiple of 5120 or 4096 chips.

With reference to the tenth aspect, or the first possible implementation manner of the tenth aspect, in a second possible implementation manner, the first information includes a preamble sequence, and the second information includes an acquisition indicator channel for a preamble sequence signature.

### BRIEF DESCRIPTION OF DRAWINGS

To describe the technical solutions in the embodiments of the present invention more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic flowchart of a method for setting a coverage level of a user terminal (user end, UE) according to a first embodiment of the present invention;
FIG. 2 is a schematic flowchart of a method 200 for indicating a coverage level for a user terminal UE according to a second embodiment of the present invention;
FIG. 3 is a schematic flowchart of a method for setting a coverage level of a user terminal (user end, UE) according to a third embodiment of the present invention;
FIG. 4 is a schematic flowchart of a method for indicating a coverage level for a user terminal UE according to a fourth embodiment of the present invention;
FIG. 5 is a schematic flowchart of a method for indicating a coverage level for a user terminal UE according to a fifth embodiment of the present invention;
FIG. 6 is a schematic structural diagram of UE according to a sixth embodiment of the present invention;
FIG. 7 is a schematic structural diagram of a control information receiving module in FIG. 6;
FIG. 8 is a schematic structural diagram of a communications device according to a seventh embodiment of the present invention;
FIG. 9 is a schematic structural diagram of a level determining module in FIG. 8;
FIG. 10 is a schematic structural diagram of UE according to an eighth embodiment of the present invention;
FIG. 11 is a schematic structural diagram of a control information receiving module in FIG. 10;
FIG. 12 is a schematic structural diagram of a communications device according to a ninth embodiment of the present invention;
FIG. 13 is a schematic structural diagram of a level determining module in FIG. 12;
FIG. 14 is another schematic structural diagram of a communications device according to a ninth embodiment of the present invention;
FIG. 15 is a schematic structural diagram of a communications device according to a tenth embodiment of the present invention;
FIG. 16 is a schematic structural diagram of UE according to an eleventh embodiment of the present invention;
FIG. 17 is a schematic structural diagram of a communications device according to a twelfth embodiment of the present invention;
FIG. 18 is a schematic structural diagram of UE according to a thirteenth embodiment of the present invention;
FIG. 19 is a schematic structural diagram of a communications device according to a fourteenth embodiment of the present invention; and
FIG. 20 is a schematic structural diagram of a communications device according to a fifteenth embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

A person of ordinary skill in the art may understand that all or some of the processes of the methods in the embodiments may be implemented by a computer program instructing related hardware. The program may be stored in a computer readable storage medium. When the program runs, the processes of the methods in the embodiments are performed. The foregoing storage medium may be a magnetic disk, an optical disc, a read-only memory (Read-Only Memory, ROM), or a random access memory (Random Access Memory, RAM).

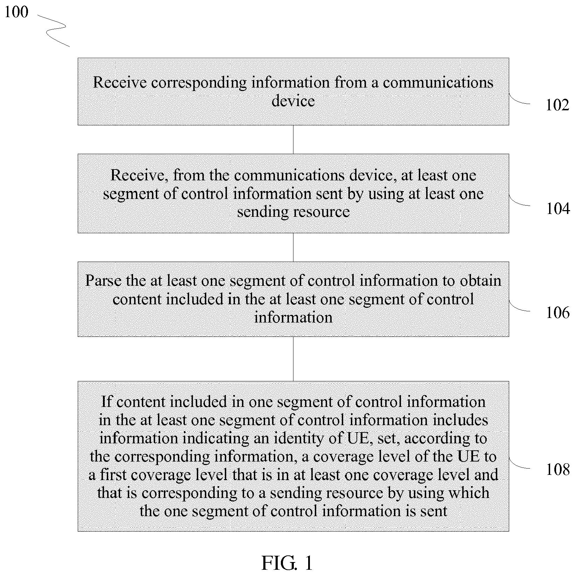

FIG. 1 is a schematic flowchart of a method 100 for setting a coverage level of a user terminal (user end, UE) according to a first embodiment of the present invention.

In step S102, receive corresponding information from a communications device. The corresponding information indicates a correspondence between at least one sending resource and at least one coverage level. In a case described in this application document, a base station determines a physical-layer parameter and/or a higher-layer parameter according to a coverage level. The physical-layer parameter or the higher-layer parameter or both need to be used when the base station sends a signal, so that the UE at the coverage level can reliably receive the signal. In the case described in this application document, poorer reception performance of the UE indicates a higher coverage level of the UE.

In step S104, receive, from the communications device, at least one segment of control information sent by using the at least one sending resource. Each segment of control information in the at least one segment of control information is sent by using one sending resource in the at least one sending resource.

In step S106, parse the at least one segment of control information to obtain content included in the at least one segment of control information.

In step S108, if content included in one segment of control information in the at least one segment of control information includes information indicating an identity of the UE, set, according to the corresponding information, a coverage level of the UE to a first coverage level that is in the at least one coverage level and that is corresponding to a sending resource by using which the one segment of control information is sent. The information indicating the identity of the UE may include a UE identity existing in cyclic redundancy check code in a form of implicit code.

Compared with the UE, the communications device can more accurately determine the coverage level of the UE. The coverage level of the UE is set according to an instruction of the communications device, so that the coverage level of the UE is more accurately set, and an actual communication requirement is better met.

In an embodiment, in step S108, the setting, according to the corresponding information if content included in one segment of control information in the at least one segment of control information includes information indicating an identity of the UE, a coverage level of the UE to a first coverage level that is in the at least one coverage level and that is corresponding to a sending resource by using which the one segment of control information is sent specifically includes: setting the coverage level of the UE to the first coverage level according to the corresponding information if the content included in the one segment of control information in the at least one segment of control information includes the information indicating the identity of the UE and at least one of the following information: uplink/downlink scheduling information, a request for aperiodic channel quality indicator reporting, a change indication and an uplink power control command of a multicast control channel, or an acknowledgment/negative acknowledgment ACK/NACK feedback on random access channel RACH resource allocation and uplink data.

In an embodiment, the at least one segment of control information includes several segments of control information. The receiving at least one segment of control information sent by using the at least one sending resource includes: periodically receiving the several segments of control information. The parsing the at least one segment of control information to obtain content included in the at least one segment of control information includes: periodically parsing the several segments of control information to obtain content included in the several segments of control information. Therefore, in this method, the coverage level of the UE may be periodically set.

In an embodiment, before the at least one segment of control information sent by using the at least one sending resource is received from the communications device, the coverage level of the UE is set to a second coverage level in the at least one coverage level. That is, before receiving the instruction of the communications device, the UE may pre-estimate a coverage level and perform setting according to a pre-estimated result. The first coverage level may be different from the second coverage level. For example, the first coverage level is one level or several levels higher than the second coverage level.

In an embodiment, that at least one segment of control information sent by using the at least one sending resource is received from the communications device includes: quality of data transmission between the communications device and the UE is detected, and if the quality is lower than a quality threshold, the at least one segment of control information sent by using the at least one sending resource is received from the communications device. That is, the UE may be subject to the setting to the coverage level by the communications device only when communication quality is lower than expected.

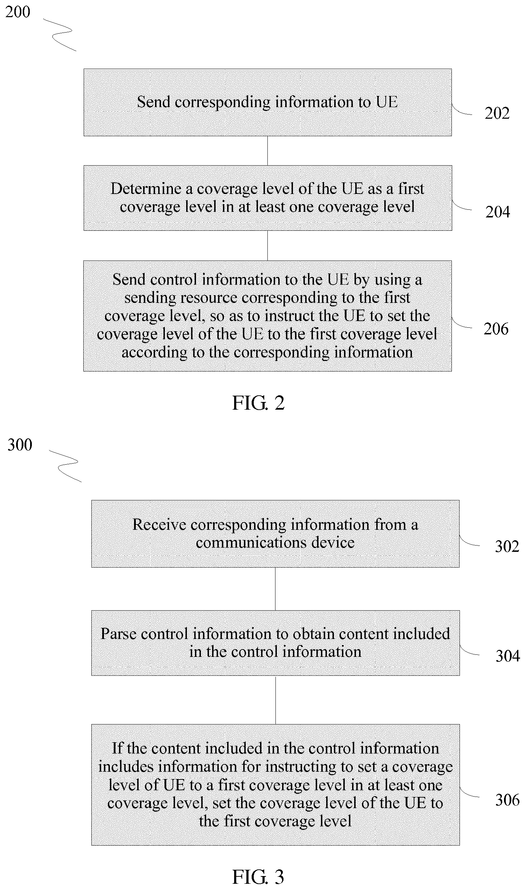

FIG. 2 is a schematic flowchart of a method 200 for indicating a coverage level for a user terminal UE according to a second embodiment of the present invention.

In step S202, send corresponding information to the UE. The corresponding information indicates a correspondence between at least one sending resource and at least one coverage level.

In step S204, determine a coverage level of the UE as a first coverage level in the at least one coverage level.

In step S206, send control information to the UE by using a sending resource corresponding to the first coverage level, so as to instruct the UE to set the coverage level of the UE to the first coverage level according to the corresponding information. Content included in the control information includes information indicating an identity of the UE. The information indicating the identity of the UE may include a UE identity existing in cyclic redundancy check code in a form of implicit code.

Compared with the UE, a communications device can more accurately determine the coverage level of the UE. The coverage level of the UE is set according to an instruction of the communications device, so that the coverage level of the UE is more accurately set, and an actual communication requirement is better met.

In an embodiment, that the sending control information to the UE by using a sending resource corresponding to the first coverage level includes: the control information is periodically sent to the UE by using the sending resource corresponding to the first coverage level. Therefore, in this method, the coverage level of the UE may be periodically set.

In an embodiment, that the determining a coverage level of the UE as a first coverage level includes: detecting quality of data transmission between the communications device and the UE, and determining the coverage level of the UE as the first coverage level according to the quality. That is, the communications device sets the coverage level of the UE only when communication quality is lower than expected.

FIG. 3 is a schematic flowchart of a method 300 for setting a coverage level of a user terminal (user end, UE) according to a third embodiment of the present invention.

In step S302, receive control information from a communications device.

In step S304, parse the control information to obtain content included in the control information.

In step S306, if the content included in the control information includes information for instructing to set a coverage level of the UE to a first coverage level in at least one coverage level, set the coverage level of the UE to the first coverage level.

Compared with the UE, the communications device can more accurately determine the coverage level of the UE. The coverage level of the UE is set according to an instruction of the communications device, so that the coverage level of the UE is more accurately set, and an actual communication requirement is better met.

In an embodiment, that the receiving control information from a communications device includes: the control information sent by using a dedicated sending resource is received from the communications device. The dedicated sending resource is only used to send information to the UE. That is, the control information does not need to include information indicating an identity of the UE, and the coverage level of the UE can still be set.

In an embodiment, that the receiving control information from a communications device includes: the control information sent by using a designated sending resource is received from the communications device. that the setting the coverage level of the UE to the first coverage level if the content included in the control information includes information for instructing to set a coverage level of the UE to a first coverage level in at least one coverage level includes: if the content included in the control information includes information indicating an identity of the UE and the information for instructing to set the coverage level of the UE to the first coverage level in the at least one coverage level, setting the coverage level of the UE to the first coverage level. The designated sending resource may be corresponding to one coverage level in the at least one coverage level. For example, the designated sending resource is corresponding to a highest coverage level in the at least one coverage level. In another embodiment, that control information is received from a communications device includes: the control information sent by using a common sending resource is received from the communications device. The common sending resource may be corresponding to several coverage levels in the at least one coverage level.

In an embodiment, the method 300 further includes: before the receiving the control information, setting the coverage level of the UE to a second coverage level in the at least one coverage level. That is, before receiving the instruction of the communications device, the UE may pre-estimate a coverage level and perform setting according to a pre-estimated result. The first coverage level may be higher than the second coverage level. For example, the first coverage level is one level or several levels higher than the second coverage level.

In an embodiment, the receiving control information includes: quality of data transmission between the communications device and the UE is detected, and if the quality is lower than a quality threshold, the control information is received. That is, the UE may be subject to the setting to the coverage level by the communications device only when communication quality is lower than expected.

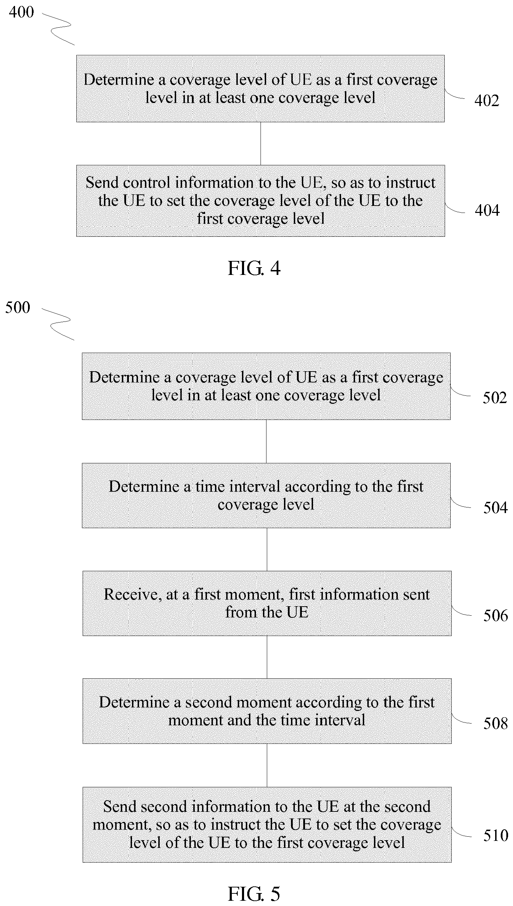

FIG. 4 is a schematic flowchart of a method 400 for indicating a coverage level for a user terminal UE according to a fourth embodiment of the present invention.

In step S402, determine a coverage level of the UE as a first coverage level in at least one coverage level. that the determining a coverage level of the UE as a first coverage level in at least one coverage level may specifically include: detecting quality of data transmission between a communications device and the UE, and determining the coverage level of the UE as the first coverage level according to the quality.

In step S404, send control information to the UE, so as to instruct the UE to set the coverage level of the UE to the first coverage level. The control information includes information for setting the first coverage level.

Compared with the UE, the communications device can more accurately determine the coverage level of the UE. The coverage level of the UE is set according to an instruction of the communications device, so that the coverage level of the UE is more accurately set, and an actual communication requirement is better met.

In an embodiment, that the sending control information to the UE includes: sending the control information to the UE by using a dedicated sending resource. The dedicated sending resource is only used to send information to the UE. That is, in this embodiment, the control information does not need to include information indicating an identity of the UE, and the coverage level of the UE can still be set.

In an embodiment, the method 400 further includes: receiving an instruction indicating a designated coverage level, and determining a sending resource that is corresponding to the designated coverage level and that is in at least one sending resource according to the instruction and a correspondence between the at least one coverage level and the at least one sending resource. that the sending control information to the UE includes: sending the control information to the UE by using the sending resource corresponding to the designated coverage level. The designated coverage level may be a highest coverage level in the at least one coverage level. The control information further includes information indicating an identity of the UE.

In another embodiment, the sending control information to the UE includes: sending the control information to the UE by using a common sending resource. The common sending resource is corresponding to several coverage levels in the at least one coverage level. The control information further includes information indicating an identity of the UE.

In an embodiment, the control information includes downlink control information DCI, and the downlink control information DCI includes information indicating an identity of the UE and the information for setting the first coverage level.

In an embodiment, that the sending control information to the UE includes: sending the control information to the UE by using a Media Access Control MAC control element. The control information further includes information indicating an identity of the UE.

In another embodiment, the sending control information to the UE includes: sending the control information to the UE by using an enhanced dedicated channel-absolute grant channel E-AGCH.

In still another embodiment, the sending control information to the UE includes: sending the control information to the UE by using a data code channel. The control information further includes information indicating an identity of the UE. The control information exists in a form of data. The data code channel is used to send data.

FIG. 5 is a schematic flowchart of a method 500 for indicating a coverage level for a user terminal UE according to a fifth embodiment of the present invention.

In step S502, determine a coverage level of the UE as a first coverage level in at least one coverage level.

In step S504, determine a time interval according to the first coverage level. The time interval may be T+N or T-N, where T is a preset delay, and N is an integer multiple of 5120 or 4096 chips.

In step S506, receive first information sent from the UE at a first moment.

In step S508, determine a second moment according to the first moment and the time interval.

In step S510, send second information to the UE at the second moment, so as to instruct the UE to set the coverage level of the UE to the first coverage level. The time interval between the second moment and the first moment is used to indicate the first coverage level.

In an embodiment, the first information includes a preamble sequence, and the second information includes an acquisition indicator channel for a preamble sequence signature.

That is, the coverage level of the UE may be set according to the time interval.

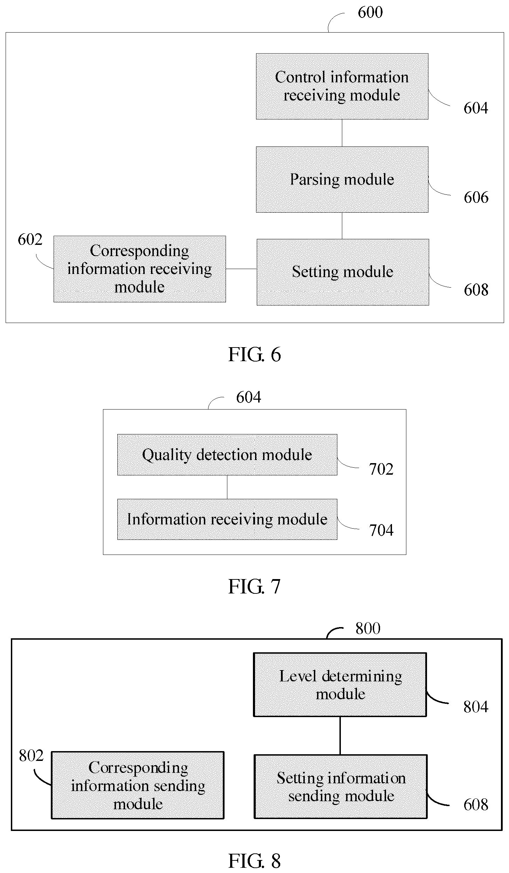

FIG. 6 is a schematic structural diagram of UE 600 according to a sixth embodiment of the present invention. The UE 600 includes a corresponding information receiving module 602, a control information receiving module 604, a parsing module 606, and a setting module 608. The corresponding information receiving module 602 is configured to receive corresponding information from a communications device, where the corresponding information indicates a correspondence between at least one sending resource and at least one coverage level. The control information receiving module 604 is configured to receive, from the communications device, at least one segment of control information sent by using the at least one sending resource, where each segment of control information in the at least one segment of control information is sent by using one sending resource in the at least one sending resource. In an embodiment, the control information receiving module 604 includes a quality detection module 702 and an information receiving module 704 that are shown in FIG. 7. The quality detection module 702 is configured to detect quality of data transmission between the communications device and the UE. The information receiving module 704 is configured to: if the quality is lower than a quality threshold, receive, from the communications device, the at least one segment of control information sent by using the at least one sending resource. The parsing module 606 is configured to parse the at least one segment of control information to obtain content included in the at least one segment of control information. The setting module 608 is configured to: if content included in one segment of control information in the at least one segment of control information includes information indicating an identity of the UE, set, according to the corresponding information, a coverage level of the UE to a first coverage level corresponding to a sending resource by using which the one segment of control information is sent. The information indicating the identity of the UE may include a UE identity existing in cyclic redundancy check code in a form of implicit code.

In an embodiment, the setting module 608 is specifically configured to set the coverage level of the UE to the first coverage level according to the corresponding information if the content included in the one segment of control information in the at least one segment of control information includes the information indicating the identity of the UE and at least one of the following information: uplink/downlink scheduling information, a request for aperiodic channel quality indicator reporting, a change indication and an uplink power control command of a multicast control channel, or an acknowledgment/negative acknowledgment ACK/NACK feedback on random access channel RACH resource allocation and uplink data.

In an embodiment, the at least one segment of control information includes several segments of control information, the control information receiving module 604 is specifically configured to periodically receive the several segments of control information, and the parsing module 606 is specifically configured to periodically parse the several segments of control information to obtain content included in the several segments of control information.

In an embodiment, the setting module 608 is further configured to: before the at least one segment of control information sent by using the at least one sending resource is received, set the coverage level of the UE to a second coverage level in the at least one coverage level. The first coverage level may be different from the second coverage level. For example, the first coverage level may be one level or several levels higher than the second coverage level.

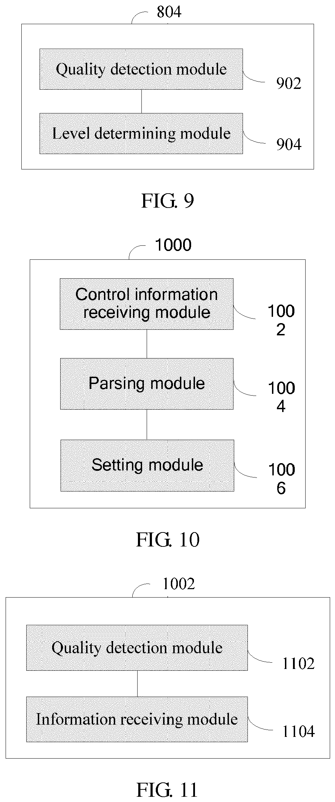

FIG. 8 is a schematic structural diagram of a communications device 800 according to a seventh embodiment of the present invention. The communications device 800 includes a corresponding information sending module 802, a level determining module 804, and a setting information sending module 806. The corresponding information sending module 802 is configured to send corresponding information to UE, where the corresponding information indicates a correspondence between at least one sending resource and at least one coverage level. In an embodiment, the corresponding information sending module 802 is specifically configured to periodically send the control information to the UE by using a sending resource corresponding to a first coverage level. The level determining module 804 is configured to determine a coverage level of the UE as the first coverage level in the at least one coverage level. The level determining module may specifically include a quality detection module 902 and a level determining module 904 that are shown in FIG. 9. The quality detection module 902 is configured to detect quality of data transmission between the communications device and the UE. The level determining module 904 is configured to determine the coverage level of the UE as the first coverage level according to the quality. The setting information sending module 806 is configured to send the control information to the UE by using the sending resource corresponding to the first coverage level, so as to instruct the UE to set the coverage level of the UE to the first coverage level according to the corresponding information. Content included in the control information includes information indicating an identity of the UE.

FIG. 10 is a schematic structural diagram of UE 1000 according to an eighth embodiment of the present invention. The UE 1000 includes a control information receiving module 1002, a parsing module 1004, and a setting module 1006. The control information receiving module 1002 is configured to receive control information from a communications device. In an embodiment, the control information receiving module 1002 includes a quality detection module 1102 and an information receiving module 1104 that are shown in FIG. 11. The quality detection module 1102 is configured to detect quality of data transmission between the communications device and the UE. The information receiving module 1104 is configured to: if the quality is lower than a quality threshold, receive the control information. The parsing module 1004 is configured to parse the control information to obtain content included in the control information. The setting module 1006 is configured to: if the content included in the control information includes information for instructing to set a coverage level of the UE to a first coverage level, set the coverage level of the UE to the first coverage level. In an embodiment, the setting module 1006 is further specifically configured to: before the control information is received, set the coverage level of the UE to a second coverage level in at least one coverage level, where the first coverage level is higher than the second coverage level.

In an embodiment, the control information receiving module 1002 is specifically configured to receive the control information sent by using a dedicated sending resource. The dedicated sending resource is only used to send information to the UE.

In another embodiment, the control information receiving module 1002 is specifically configured to receive, from the communications device, the control information sent by using a designated sending resource, where the designated sending resource is corresponding to one coverage level in the at least one coverage level, and the setting module 1006 is specifically configured to set the coverage level of the UE to the first coverage level if the content included in the control information includes information indicating an identity of the UE and the information for instructing to set the coverage level of the UE to the first coverage level.

In still another embodiment, the control information receiving module 1002 is specifically configured to receive, from the communications device, the control information sent by using a common sending resource. The common sending resource may be corresponding to several coverage levels in at least one coverage level.

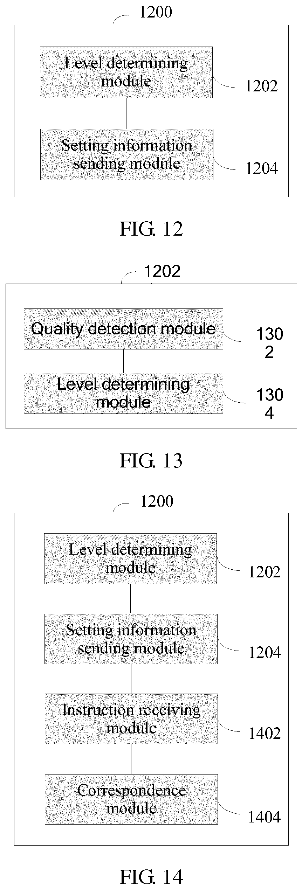

FIG. 12 is a schematic structural diagram of a communications device 1200 according to a ninth embodiment of the present invention. The communications device 1200 includes a level determining module 1202 and a setting information sending module 1204. The level determining module 1202 is configured to determine a coverage level of UE as a first coverage level in at least one coverage level. In an embodiment, the level determining module 1202 includes a quality detection module 1302 and a level determining module 1304 that are shown in FIG. 13. The quality detection module 1302 is configured to detect quality of data transmission between the communications device and the UE. The level determining module 1304 is configured to determine the coverage level of the UE as the first coverage level according to the quality. The setting information sending module 1204 is configured to send control information to the UE, so as to instruct the UE to set the coverage level of the UE to the first coverage level, where the control information includes information for setting the first coverage level.

In an embodiment, the setting information sending module 1204 is specifically configured to send the control information to the UE by using a dedicated sending resource. The dedicated sending resource is only used to send information to the UE.

In another embodiment, the communications device 1200 further includes an instruction receiving module 1402 and a correspondence module 1404 that are shown in FIG. 14. The instruction receiving module 1402 is configured to receive an instruction indicating a designated coverage level. The correspondence module 1404 is configured to determine, according to the instruction and a correspondence between the at least one coverage level and at least one sending resource, a sending resource that is corresponding to the designated coverage level and that is in the at least one sending resource. The setting information sending module 1204 is specifically configured to send the control information to the UE by using the sending resource corresponding to the designated coverage level. The control information further includes information indicating an identity of the UE. The designated coverage level may be a highest coverage level in the at least one coverage level.

In still another embodiment, the setting information sending module 1204 is specifically configured to send the control information to the UE by using a common sending resource. The common sending resource is corresponding to several coverage levels in the at least one coverage level. The control information further includes information indicating an identity of the UE.

In an embodiment, the control information includes downlink control information DCI, and the downlink control information DCI includes information indicating an identity of the UE and the information for setting the first coverage level.

In another embodiment, the setting information sending module 1204 is specifically configured to send the control information to the UE by using a Media Access Control MAC control element. The control information further includes information indicating an identity of the UE.

In still another embodiment, the setting information sending module 1204 is specifically configured to send the control information to the UE by using an enhanced dedicated channel-absolute grant channel E-AGCH.

In yet another embodiment, the setting information sending module 1204 is specifically configured to send the control information to the UE by using a data code channel. The control information exists in a form of data. The data code channel is used to send data. The control information further includes information indicating an identity of the UE.

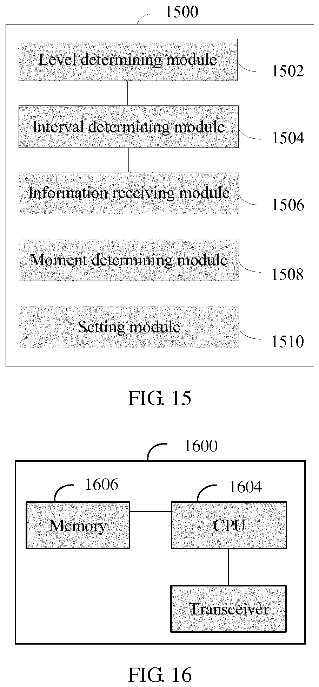

FIG. 15 is a schematic structural diagram of a communications device 1500 according to a tenth embodiment of the present invention. The communications device 1500 includes a level determining module 1502, an interval determining module 1504, an information receiving module 1506, a moment determining module 1508, and a setting module 1510. The level determining module 1502 is configured to determine a coverage level of UE as a first coverage level in at least one coverage level. The interval determining module 1504 is configured to determine a time interval according to the first coverage level. The information receiving module 1506 is configured to receive, at a first moment, first information sent from the UE. The moment determining module 1508 is configured to determine a second moment according to the first moment and the time interval. The setting module 1510 is configured to send second information to the UE at the second moment, so as to instruct the UE to set the coverage level of the UE to the first coverage level. The time interval between the second moment and the first moment is used to indicate the first coverage level. The first information may include a preamble sequence. The second information may include an acquisition indicator channel for a preamble sequence signature. In an embodiment, the time interval is T+N or T-N, where T is a preset delay, and N is an integer multiple of 5120 or 4096 chips.

FIG. 16 is a schematic structural diagram of UE 1600 according to an eleventh embodiment of the present invention. The UE 1600 includes a transceiver 1602, a central processing unit (Central Process Unit, CPU) 1604, and a register 1606.

The transceiver 1602 is configured to: receive corresponding information from a communications device, where the corresponding information indicates a correspondence between at least one sending resource and at least one coverage level; and receive, from the communications device, at least one segment of control information sent by using the at least one sending resource, where each segment of control information in the at least one segment of control information is sent by using one sending resource in the at least one sending resource. In an embodiment, the transceiver 1602 is configured to: detect quality of data transmission between the communications device and the UE, and if the quality is lower than a quality threshold, receive, from the communications device, the at least one segment of control information sent by using the at least one sending resource.

The register 1606 is configured to store an instruction. The CPU 1604 is configured to: read the instruction from the register 1606, parse the at least one segment of control information according to the instruction to obtain content included in the at least one segment of control information, and if content included in one segment of control information in the at least one segment of control information includes information indicating an identity of the UE, set, according to the corresponding information, a coverage level of the UE to a first coverage level corresponding to a sending resource by using which the one segment of control information is sent. The information indicating the identity of the UE may include a UE identity existing in cyclic redundancy check code in a form of implicit code. In an embodiment, the at least one segment of control information includes several segments of control information, the transceiver 1602 is specifically configured to periodically receive the several segments of control information, and the CPU 1604 is specifically configured to periodically parse the several segments of control information according to the instruction read from the register 1606 to obtain content included in the several segments of control information.

In an embodiment, the CPU 1604 is further configured to: before the at least one segment of control information sent by using the at least one sending resource is received, set the coverage level of the UE to a second coverage level in the at least one coverage level according to the instruction read from the register 1606. The first coverage level may be different from the second coverage level. For example, the first coverage level may be one level or several levels higher than the second coverage level.

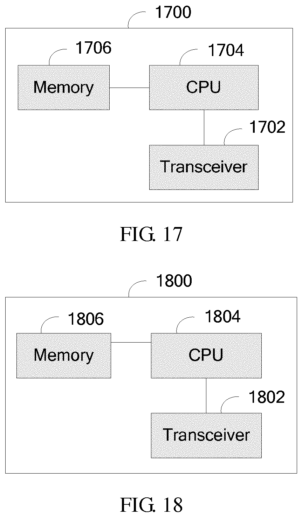

FIG. 17 is a schematic structural diagram of a communications device 1700 according to a twelfth embodiment of the present invention. The communications device 1700 includes a transceiver 1702, a CPU 1704, and a register 1706.

The transceiver 1702 is configured to send corresponding information to UE, where the corresponding information indicates a correspondence between at least one sending resource and at least one coverage level. In an embodiment, the transceiver 1702 is specifically configured to periodically send the control information to the UE by using a sending resource corresponding to a first coverage level.

The register 1706 is configured to store an instruction. The CPU 1704 is configured to: read the instruction from the register 1706, and determine a coverage level of the UE as the first coverage level in the at least one coverage level according to the instruction. In an embodiment, the CPU 1704 is further configured to detect quality of data transmission between the communications device and the UE according to the instruction read from the register 1706, and determine the coverage level of the UE as the first coverage level according to the quality. The transceiver 1702 is further configured to send the control information to the UE by using the sending resource corresponding to the first coverage level, so as to instruct the UE to set the coverage level of the UE to the first coverage level according to the corresponding information. Content included in the control information includes information indicating an identity of the UE.

FIG. 18 is a schematic structural diagram of UE 1800 according to a thirteenth embodiment of the present invention. The UE 1800 includes a transceiver 1802, a central processing unit (Central Process Unit, CPU) 1804, and a register 1806.

The transceiver 1802 is configured to receive control information from a communications device. In an embodiment, the transceiver 1802 is configured to detect quality of data transmission between the communications device and the UE, and receive the control information if the quality is lower than a quality threshold. The register 1806 is configured to store an instruction. The CPU 1804 is configured to: read the instruction from the register 1806, and parse the control information according to the instruction to obtain content included in the control information. The CPU 1804 is configured to: if the content included in the control information includes information for instructing to set a coverage level of the UE to a first coverage level, set the coverage level of the UE to the first coverage level. In an embodiment, the CPU 1804 is further specifically configured to: before the control information is received, set the coverage level of the UE to a second coverage level in at least one coverage level. The first coverage level is higher than the second coverage level.

In an embodiment, the transceiver 1802 is specifically configured to receive the control information sent by using a dedicated sending resource. The dedicated sending resource is only used to send information to the UE.

In another embodiment, the transceiver 1802 is specifically configured to receive, from the communications device, the control information sent by using a designated sending resource, where the designated sending resource is corresponding to one coverage level in the at least one coverage level, and the CPU 1804 is specifically configured to: if the content included in the control information includes information indicating an identity of the UE and the information for instructing to set the coverage level of the UE to the first coverage level, set the coverage level of the UE to the first coverage level.

In still another embodiment, the transceiver 1802 is specifically configured to receive, from the communications device, the control information sent by using a common sending resource. The common sending resource may be corresponding to several coverage levels in at least one coverage level.

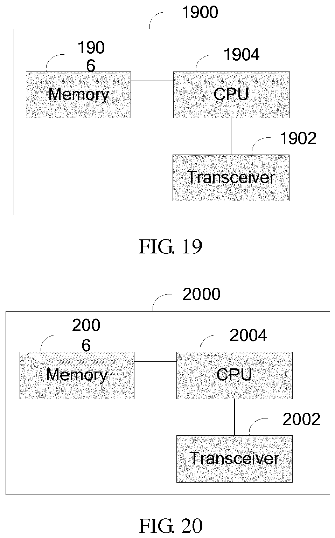

FIG. 19 is a schematic structural diagram of a communications device 1900 according to a fourteenth embodiment of the present invention. The communications device 1900 includes a transceiver 1902, a CPU 1904, and a register 1906.

The register 1906 is configured to store an instruction. The CPU 1904 is configured to: read the instruction from the register 1906, and determine a coverage level of UE as a first coverage level in at least one coverage level according to the instruction. In an embodiment, the CPU 1904 is configured to detect quality of data transmission between the communications device and the UE according to the instruction, and determine the coverage level of the UE as the first coverage level according to the quality. The transceiver 1902 is configured to send control information to the UE, so as to instruct the UE to set the coverage level of the UE to the first coverage level. The control information includes information for setting the first coverage level.

In an embodiment, the transceiver 1902 is specifically configured to send the control information to the UE by using a dedicated sending resource. The dedicated sending resource is only used to send information to the UE.

In another embodiment, the transceiver 1902 is further configured to receive an instruction indicating a designated coverage level. The CPU 1904 is configured to determine, according to a correspondence between the at least one coverage level and at least one sending resource and the instruction indicating the designated coverage level, a sending resource that is corresponding to the designated coverage level and that is in the at least one sending resource. The transceiver 1902 is specifically configured to send the control information to the UE by using the sending resource corresponding to the designated coverage level. The control information further includes information indicating an identity of the UE. The designated coverage level may be a highest coverage level in the at least one coverage level.

In still another embodiment, the transceiver 1902 is specifically configured to send the control information to the UE by using a common sending resource. The common sending resource is corresponding to several coverage levels in the at least one coverage level. The control information further includes information indicating an identity of the UE.

In an embodiment, the control information includes downlink control information DCI, and the downlink control information DCI includes information indicating an identity of the UE and the information for setting the first coverage level.

In another embodiment, the transceiver 1902 is specifically configured to send the control information to the UE by using a Media Access Control MAC control element. The control information further includes information indicating an identity of the UE.

In still another embodiment, the transceiver 1902 is specifically configured to send the control information to the UE by using an enhanced dedicated channel-absolute grant channel E-AGCH.

In yet another embodiment, the transceiver 1902 is specifically configured to send the control information to the UE by using a data code channel. The control information exists in a form of data. The data code channel is used to send data. The control information further includes information indicating an identity of the UE.

FIG. 20 is a schematic structural diagram of a communications device 2000 according to a fifteenth embodiment of the present invention. The communications device 2000 includes a transceiver 2002, a CPU 2004, and a register 2006.

The register 2006 is configured to store an instruction. The CPU 2004 is configured to: read the instruction from the register 2006, determine a coverage level of UE as a first coverage level in at least one coverage level according to the instruction, and determine a time interval according to the first coverage level. The transceiver 2002 is configured to receive, at a first moment, first information sent from the UE. The CPU 2004 is configured to: determine a second moment according to the first moment and the time interval, and send second information to the UE at the second moment, so as to instruct the UE to set the coverage level of the UE to the first coverage level. The time interval between the second moment and the first moment is used to indicate the first coverage level. The first information may include a preamble sequence. The second information may include an acquisition indicator channel for a preamble sequence signature. In an embodiment, the time interval is T+N or T-N, where T is a preset delay, and N is an integer multiple of 5120 or 4096 chips.

In this application document, each apparatus embodiment and a corresponding method embodiment thereof have similar advantages.

What is disclosed above is merely examples of embodiments of the present invention, and certainly is not intended to limit the protection scope of the present invention. Therefore, equivalent variations made in accordance with the claims of the present invention shall fall within the scope of the present invention.

## Claims

1. A method for setting a coverage level of a user terminal UE, comprising:
receiving corresponding information from a communications device, wherein the corresponding information indicates a correspondence between at least one sending resource and at least one coverage level;
receiving, from the communications device, at least one segment of control information sent by using the at least one sending resource, wherein each segment of control information in the at least one segment of control information is sent by using one sending resource in the at least one sending resource;
parsing the at least one segment of control information to obtain content comprised in the at least one segment of control information; and
setting, according to the corresponding information if content comprised in one segment of control information in the at least one segment of control information comprises information indicating an identity of the UE, a coverage level of the UE to a first coverage level that is in the at least one coverage level and that is corresponding to a sending resource by using which the one segment of control information is sent.

2. The method according to claim 1, wherein the setting, according to the corresponding information if content comprised in one segment of control information in the at least one segment of control information comprises information indicating an identity of the UE, a coverage level of the UE to a first coverage level that is in the at least one coverage level and that is corresponding to a sending resource by using which the one segment of control information is sent comprises: setting the coverage level of the UE to the first coverage level according to the corresponding information if the content comprised in the one segment of control information in the at least one segment of control information comprises the information indicating the identity of the UE and at least one of the following information: uplink/downlink scheduling information, a request for aperiodic channel quality indicator reporting, a change indication and an uplink power control command of a multicast control channel, or an acknowledgment/negative acknowledgment ACK/NACK feedback on random access channel RACH resource allocation and uplink data.

3. The method according to claim 1 or 2, wherein the at least one segment of control information comprises several segments of control information; and
the receiving at least one segment of control information sent by using the at least one sending resource comprises: periodically receiving the several segments of control information; and
the parsing the at least one segment of control information to obtain content comprised in the at least one segment of control information comprises: periodically parsing the several segments of control information to obtain content comprised in the several segments of control information.

4. The method according to any one of claims 1 to 3, further comprising: before the receiving, from the communications device, at least one segment of control information sent by using the at least one sending resource, setting the coverage level of the UE to a second coverage level in the at least one coverage level.

5. The method according to claim 4, wherein the first coverage level is different from the second coverage level.

6. The method according to claim 5, wherein the first coverage level is one level higher than the second coverage level.

7. The method according to any one of claims 1 to 6, wherein the receiving, from the communications device, at least one segment of control information sent by using the at least one sending resource comprises:
detecting quality of data transmission between the communications device and the UE; and
if the quality is lower than a quality threshold, receiving, from the communications device, the at least one segment of control information sent by using the at least one sending resource.

8. The method according to any one of claims 1 to 7, wherein the information indicating the identity of the UE comprises a UE identity existing in cyclic redundancy check code in a form of implicit code.

9. A method for indicating a coverage level for a user terminal UE, comprising:
sending corresponding information to the UE, wherein the corresponding information indicates a correspondence between at least one sending resource and at least one coverage level;
determining a coverage level of the UE as a first coverage level in the at least one coverage level; and
sending control information to the UE by using a sending resource corresponding to the first coverage level, so as to instruct the UE to set the coverage level of the UE to the first coverage level according to the corresponding information, wherein content comprised in the control information comprises information indicating an identity of the UE.

10. The method according to claim 9, wherein the sending control information to the UE by using a sending resource corresponding to the first coverage level comprises: periodically sending the control information to the UE by using the sending resource corresponding to the first coverage level.

11. The method according to claim 9 or 10, wherein the determining a coverage level of the UE as a first coverage level comprises:
detecting quality of data transmission between a communications device and the UE; and
determining the coverage level of the UE as the first coverage level according to the quality.

12. A method for setting a coverage level of UE, comprising:
receiving control information from a communications device;
parsing the control information to obtain content comprised in the control information; and
setting, if the content comprises information for instructing to set a coverage level of the UE to a first coverage level in at least one coverage level, the coverage level of the UE to the first coverage level.

13. The method according to claim 12, wherein the receiving control information from a communications device comprises: receiving, from the communications device, the control information sent by using a dedicated sending resource, wherein the dedicated sending resource is only used to send information to the UE.

14. The method according to claim 12, wherein the receiving control information from a communications device comprises: receiving, from the communications device, the control information sent by using a designated sending resource, wherein the designated sending resource is corresponding to one coverage level in the at least one coverage level; and
the setting, if the content comprises information for instructing to set a coverage level of the UE to a first coverage level in at least one coverage level, the coverage level of the UE to the first coverage level comprises: setting the coverage level of the UE to the first coverage level if the content comprises information indicating an identity of the UE and the information for instructing to set the coverage level of the UE to the first coverage level in the at least one coverage level.

15. The method according to claim 12, wherein the designated sending resource is corresponding to a highest coverage level in the at least one coverage level.

16. The method according to claim 12, wherein the receiving control information from a communications device comprises: receiving, from the communications device, the control information sent by using a common sending resource, wherein the common sending resource is corresponding to several coverage levels in the at least one coverage level.

17. The method according to any one of claims 12 to 16, wherein the method further comprises: before the receiving control information, setting the coverage level of the UE to a second coverage level in the at least one coverage level, wherein the first coverage level is higher than the second coverage level.

18. The method according to any one of claims 12 to 17, wherein the receiving control information comprises:
detecting quality of data transmission between the communications device and the UE; and
if the quality is lower than a quality threshold, receiving the control information.

19. A method for indicating a coverage level for a user terminal UE, comprising:
determining a coverage level of the UE as a first coverage level in at least one coverage level; and
sending control information to the UE, so as to instruct the UE to set the coverage level of the UE to the first coverage level, wherein the control information comprises information for setting the first coverage level.

20. The method according to claim 19, wherein the sending control information to the UE comprises: sending the control information to the UE by using a dedicated sending resource, wherein the dedicated sending resource is only used to send information to the UE.

21. The method according to claim 19, wherein the method further comprises: receiving an instruction indicating a designated coverage level, and determining, according to the instruction and a correspondence between the at least one coverage level and at least one sending resource, a sending resource that is corresponding to the designated coverage level and that is in the at least one sending resource; and the sending control information to the UE comprises: sending the control information to the UE by using the sending resource corresponding to the designated coverage level, wherein the control information further comprises information indicating an identity of the UE.

22. The method according to claim 21, wherein the designated coverage level is a highest coverage level in the at least one coverage level.

23. The method according to claim 19, wherein the sending control information to the UE comprises: sending the control information to the UE by using a common sending resource, wherein the common sending resource is corresponding to several coverage levels in the at least one coverage level, and the control information further comprises information indicating an identity of the UE.

24. The method according to any one of claims 19 to 23, wherein the determining a coverage level of the UE as a first coverage level in at least one coverage level comprises:
detecting quality of data transmission between a communications device and the UE; and
determining the coverage level of the UE as the first coverage level according to the quality.

25. The method according to claim 19, wherein the control information comprises downlink control information DCI, and the downlink control information DCI comprises information indicating an identity of the UE and the information for setting the first coverage level.

26. The method according to claim 19, wherein the sending control information to the UE comprises: sending the control information to the UE by using a Media Access Control MAC control element, wherein the control information further comprises information indicating an identity of the UE.

27. The method according to claim 19, wherein the sending control information to the UE comprises: sending the control information to the UE by using an enhanced dedicated channel-absolute grant channel E-AGCH.

28. The method according to claim 19, wherein the sending control information to the UE comprises: sending the control information to the UE by using a data code channel, wherein the control information exists in a form of data, the data code channel is used to send data, and the control information further comprises information indicating an identity of the UE.

29. A method for indicating a coverage level for a user terminal UE, comprising:
determining a coverage level of the UE as a first coverage level in at least one coverage level; and
determining a time interval according to the first coverage level;
receiving, at a first moment, first information sent from the UE;
determining a second moment according to the first moment and the time interval; and
sending second information to the UE at the second moment, so as to instruct the UE to set the coverage level of the UE to the first coverage level, wherein the time interval between the second moment and the first moment is used to indicate the first coverage level.

30. The method according to claim 29, wherein the time interval is T+N or T-N, wherein T is a preset delay, and N is an integer multiple of 5120 or 4096 chips.

31. The method according to claim 29 or 30, wherein the first information comprises a preamble sequence, and the second information comprises an acquisition indicator channel for a preamble sequence signature.

32. A user terminal UE, comprising:
a corresponding information receiving module, configured to receive corresponding information from a communications device, wherein the corresponding information indicates a correspondence between at least one sending resource and at least one coverage level;
a control information receiving module, configured to receive, from the communications device, at least one segment of control information sent by using the at least one sending resource, wherein each segment of control information in the at least one segment of control information is sent by using one sending resource in the at least one sending resource;
a parsing module, configured to parse the at least one segment of control information to obtain content comprised in the at least one segment of control information; and
a setting module, configured to: if content comprised in one segment of control information in the at least one segment of control information comprises information indicating an identity of the UE, set, according to the corresponding information, a coverage level of the UE to a first coverage level corresponding to a sending resource by using which the one segment of control information is sent.

33. The UE according to claim 32, wherein the setting module is specifically configured to set the coverage level of the UE to the first coverage level according to the corresponding information if the content comprised in the one segment of control information in the at least one segment of control information comprises the information indicating the identity of the UE and at least one of the following information: uplink/downlink scheduling information, a request for aperiodic channel quality indicator reporting, a change indication and an uplink power control command of a multicast control channel, or an acknowledgment/negative acknowledgment ACK/NACK feedback on random access channel RACH resource allocation and uplink data.

34. The UE according to claim 32 or 33, wherein the at least one segment of control information comprises several segments of control information, the control information receiving module is specifically configured to periodically receive the several segments of control information, and the parsing module is specifically configured to periodically parse the several segments of control information to obtain content comprised in the several segments of control information.

35. The UE according to claims 32 to 34, wherein the setting module is further configured to: before the receiving at least one segment of control information sent by using the at least one sending resource, set the coverage level of the UE to a second coverage level in the at least one coverage level.

36. The UE according to claim 35, wherein the first coverage level is different from the second coverage level.

37. The method according to claim 36, wherein the first coverage level is one level higher than the second coverage level.

38. The method according to any one of claims 32 to 37, wherein the control information receiving module comprises:
a quality detection module, configured to detect quality of data transmission between the communications device and the UE; and
an information receiving module, configured to: if the quality is lower than a quality threshold, receive, from the communications device, the at least one segment of control information sent by using the at least one sending resource.

39. The method according to any one of claims 32 to 38, wherein the information indicating the identity of the UE comprises a UE identity existing in cyclic redundancy check code in a form of implicit code.

40. A communications device, comprising:
a corresponding information sending module, configured to send corresponding information to UE, wherein the corresponding information indicates a correspondence between at least one sending resource and at least one coverage level;
a level determining module, configured to determine a coverage level of the UE as a first coverage level in the at least one coverage level; and
a setting information sending module, configured to send control information to the UE by using a sending resource corresponding to the first coverage level, so as to instruct the UE to set the coverage level of the UE to the first coverage level according to the corresponding information, wherein content comprised in the control information comprises information indicating an identity of the UE.

41. The communications device according to claim 40, wherein the corresponding information sending module is specifically configured to periodically send the control information to the UE by using the sending resource corresponding to the first coverage level.

42. The communications device according to claim 40 or 41, wherein the level determining module comprises:
a quality detection module, configured to detect quality of data transmission between the communications device and the UE; and
a level determining module, configured to determine the coverage level of the UE as the first coverage level according to the quality.

43. A user terminal UE, comprising:
a control information receiving module, configured to receive control information from a communications device;
a parsing module, configured to parse the control information to obtain content comprised in the control information; and
a setting module, configured to: if the content comprises information for instructing to set a coverage level of the UE to a first coverage level, set the coverage level of the UE to the first coverage level.

44. The UE according to claim 43, wherein the control information receiving module is specifically configured to receive the control information sent by using a dedicated sending resource, wherein the dedicated sending resource is only used to send information to the UE.

45. The UE according to claim 43, wherein the control information receiving module is specifically configured to receive, from the communications device, the control information sent by using a designated sending resource, wherein the designated sending resource is corresponding to one coverage level in the at least one coverage level; and
the setting module is specifically configured to set the coverage level of the UE to the first coverage level if the content comprises information indicating an identity of the UE and the information for instructing to set the coverage level of the UE to the first coverage level.

46. The UE according to claim 43, wherein the control information receiving module is specifically configured to receive, from the communications device, the control information sent by using a common sending resource, wherein the common sending resource may be corresponding to several coverage levels in at least one coverage level.

47. The UE according to any one of claims 43 to 46, wherein the setting module is further specifically configured to: before the receiving control information, set the coverage level of the UE to a second coverage level in the at least one coverage level, wherein the first coverage level is higher than the second coverage level.

48. The UE according to any one of claims 43 to 47, wherein the control information receiving module comprises:
a quality detection module, configured to detect quality of data transmission between the communications device and the UE; and
an information receiving module, configured to: if the quality is lower than a quality threshold, receive the control information.

49. A communications device, comprising:
a level determining module, configured to determine a coverage level of UE as a first coverage level in at least one coverage level; and
a setting information sending module, configured to send control information to the UE, so as to instruct the UE to set the coverage level of the UE to the first coverage level, wherein the control information comprises information for setting the first coverage level.

50. The communications device according to claim 49, wherein the setting information sending module is specifically configured to send the control information to the UE by using a dedicated sending resource, wherein the dedicated sending resource is only used to send information to the UE.

51. The communications device according to claim 49, wherein the communications device further comprises:
an instruction receiving module, configured to receive an instruction indicating a designated coverage level; and
a correspondence module, configured to determine, according to the instruction and a correspondence between the at least one coverage level and at least one sending resource, a sending resource that is corresponding to the designated coverage level and that is in the at least one sending resource; and
the setting information sending module is specifically configured to send the control information to the UE by using the sending resource corresponding to the designated coverage level, wherein the control information further comprises information indicating an identity of the UE.

52. The communications device according to claim 51, wherein the designated coverage level is a highest coverage level in the at least one coverage level.

53. The communications device according to claim 52, wherein the setting information sending module is specifically configured to send the control information to the UE by using a common sending resource, wherein the common sending resource is corresponding to several coverage levels in the at least one coverage level, and the control information further comprises information indicating an identity of the UE.

54. The communications device according to any one of claims 49 to 53, wherein the level determining module comprises:
a quality detection module, configured to detect quality of data transmission between the communications device and the UE; and
a level determining module, configured to determine the coverage level of the UE as the first coverage level according to the quality.

55. The communications device according to claim 49, wherein the control information comprises downlink control information DCI, and the downlink control information DCI comprises information indicating an identity of the UE and the information for setting the first coverage level.

56. The communications device according to claim 49, wherein the setting information sending module is specifically configured to send the control information to the UE by using a Media Access Control MAC control element, wherein the control information further comprises information indicating an identity of the UE.

57. The communications device according to claim 49, wherein the setting information sending module is specifically configured to send the control information to the UE by using an enhanced dedicated channel-absolute grant channel E-AGCH.

58. The communications device according to claim 49, wherein the setting information sending module is specifically configured to send the control information to the UE by using a data code channel, wherein the control information exists in a form of data, the data code channel is used to send data, and the control information further comprises information indicating an identity of the UE.

59. A communications device, comprising:
a level determining module, configured to determine a coverage level of UE as a first coverage level in at least one coverage level;
an interval determining module, configured to determine a time interval according to the first coverage level;
an information receiving module, configured to receive, at a first moment, first information sent from the UE;
a moment determining module, configured to determine a second moment according to the first moment and the time interval; and
a setting module, configured to send second information to the UE at the second moment, so as to instruct the UE to set the coverage level of the UE to the first coverage level, wherein the time interval between the second moment and the first moment is used to indicate the first coverage level.

60. The communications device according to claim 59, wherein the time interval is T+N or T-N, wherein T is a preset delay, and N is an integer multiple of 5120 or 4096 chips.

61. The communications device according to claim 59 or 60, wherein the first information comprises a preamble sequence, and the second information comprises an acquisition indicator channel for a preamble sequence signature.
